(19) Europäisches Patentamt
European Patent Office
Office européen des brevets

(11) **EP 3 542 925 A1**

(12) **EUROPÄISCHE PATENTANMELDUNG**

(43) Veröffentlichungstag:
**25.09.2019 Patentblatt 2019/39**

(21) Anmeldenummer: **18162718.3**

(22) Anmeldetag: **20.03.2018**

(51) Int Cl.:
*B22F 1/00* (2006.01)    *B22F 3/105* (2006.01)
*B33Y 10/00* (2015.01)   *B33Y 70/00* (2015.01)
*C22C 45/10* (2006.01)   *C22C 1/00* (2006.01)
*C22C 33/04* (2006.01)   *C22C 33/00* (2006.01)
*B22F 3/00* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Heraeus Additive Manufacturing
GmbH
63450 Hanau (DE)**

(72) Erfinder: **Stolpe, Moritz
63450 Hanau (DE)**

(74) Vertreter: **Heraeus IP
Heraeus Holding GmbH
Intellectual Property
Heraeusstraße 12-14
63450 Hanau (DE)**

(54) **HERSTELLUNG EINES METALLISCHEN MASSIVGLAS-KOMPOSITMATERIALS MITTELS PULVERBASIERTER, ADDITIVER FERTIGUNG**

(57) Die vorliegende Erfindung betrifft ein Verfahren zur Herstellung eines metallischen Massivglas-Kompositmaterials, wobei das metallische Massivglas-Kompositmaterial mindestens zwei Phasen aufweist, wobei die erste Phase ein metallisches Massivglas ist und wobei mindestens eine weitere Phase ausgewählt ist aus der Gruppe bestehend aus kristallinem Metall, metallischem Glas, nicht-metallischem Glas und Keramik, dadurch gekennzeichnet, dass die Herstellung durch ein pulverbasiertes, additives Fertigungsverfahrens erfolgt.

EP 3 542 925 A1

**Beschreibung**

Die vorliegende Erfindung betrifft ein Verfahren zur Herstellung eines metallischen Massivglas-Kompositmaterials durch ein pulverbasiertes, additives Fertigungsverfahren sowie ein durch das Verfahren hergestelltes, metallisches Massivglas-Kompositmaterial. Weiterhin betrifft die Erfindung ein aus dem erfindungsgemäßen Kompositmaterial gefertigtes dreidimensionales Bauteil.

Seit ihrer Entdeckung vor etwa 50 Jahren am California Institute of Technology sind metallische Gläser Gegenstand umfangreicher Forschung. Im Laufe der Jahre gelang es, die Prozessierbarkeit und Eigenschaften dieser Materialklasse kontinuierlich zu verbessern. Waren die ersten metallischen Gläser noch einfache, binäre (aus zwei Komponenten aufgebaute) Legierungen, deren Herstellung Abkühlraten im Bereich von $10^6$ Kelvin pro Sekunde (K/s) erforderten, lassen sich neuere, komplexere Legierungen bereits bei deutlich geringeren Abkühlraten im Bereich einiger K/s in den Glaszustand überführen. Dies hat erheblichen Einfluss auf die Prozessführung sowie die realisierbaren Bauteile. Die Abkühlgeschwindigkeit, ab der eine Kristallisation der Schmelze ausbleibt und die Schmelze als Glas erstarrt, wird als kritische Abkühlrate bezeichnet. Sie ist eine systemspezifische, stark von der Zusammensetzung der Schmelze abhängige Größe, welche zudem die maximal erreichbaren Bauteildicken festlegt. Bedenkt man, dass die in der Schmelze gespeicherte Wärmeenergie ausreichend schnell durch das System abtransportiert werden muss, wird klar, dass sich aus Systemen mit hohen kritischen Abkühlraten lediglich Bauteile mit geringer Dicke fertigen lassen. Anfänglich wurden metallische Gläser daher meist nach dem Schmelzspinnverfahren (Englisch: melt spinning) hergestellt. Die Schmelze wird hierbei auf ein rotierendes Kupferrad abgestreift und erstarrt glasartig in Form von dünnen Bändern bzw. Folien mit Dicken im Bereich einiger hundertstel bis zehntel Millimeter. Durch die Entwicklung neuer, komplexer Legierungen mit deutlich geringeren kritischen Abkühlraten, können zunehmend andere Herstellungsverfahren genutzt werden. Heutige glasbildende metallische Legierungen lassen sich bereits durch Gießen einer Schmelze in gekühlte Kupferkokillen in den Glaszustand überführen. Die realisierbaren Bauteildicken liegen dabei legierungsspezifisch im Bereich einiger Millimeter bis Zentimeter. Derartige Legierungen werden als metallische Massivgläser (Englisch: Bulk Metallic Glasses, BMG) bezeichnet. Heutzutage ist eine Vielzahl solcher Legierungssysteme bekannt. Ihre Unterteilung erfolgt gewöhnlich anhand der Zusammensetzung, wobei man das Legierungselement mit dem höchsten Gewichtsanteil als Basiselement bezeichnet. Die bestehenden Systeme umfassen beispielsweise Edelmetall-basierte Legierungen wie bspw. Gold-, Platin, und Palladium-basierte metallische Massivgläser, frühe Übergangsmetall basierte Legierungen wie z.B. Titan- oder Zirkonium-basierte metallische Massivgläser, späte Übergangsmetall-basierte Systeme auf Basis von Kupfer-, Nickel- oder Eisen, aber auch Systeme auf Basis von seltenen Erden, z.B. Neodym oder Terbium.

Metallische Massivgläser weisen im Vergleich zu klassischen kristallinen Metallen typischer Weise folgende Eigenschaften auf:

- eine höhere spezifische Festigkeit, was zum Beispiel dünnere Wandstärken ermöglicht,
- eine höhere Härte, wodurch die Oberflächen besonders kratzfest sein können,
- eine viel höhere elastische Dehnbarkeiten und Resilienzen,
- eine thermoplastische Formbarkeit und
- eine höhere Korrosionsbeständigkeit.

Metallische Massivgläser können je nach Anwendung auch Nachteile aufweisen.

Beispielsweise zeigen metallische Massivgläser unter Zugbeanspruchung häufig sprödes, katastrophales Materialversagen. Konkrete Materialanwendungen metallischer Massivgläser beinhalten also oftmals Anforderungen, welche einzelne monolithische, metallische Massivgläser nicht oder nur teilweise erfüllen können.

Abhilfe können hier Kompositmaterialien schaffen, die metallische Massivgläser in Kombination mit weiteren Materialkomponenten enthalten. Durch das Zusammenfügen zweier oder mehrerer Ausgangswerkstoffe zu einem Kompositmaterial lassen sich die Eigenschaftsprofile der Ausgangswerkstoffe in einem Material vereinen. Als Resultat besitzt das Kompositmaterial ein Eigenschaftsprofil, das sich signifikant von dem der einzelnen Materialien unterscheidet. Daher können Kompositmaterialien eine gezielte Anpassung der elektrischen, magnetischen, thermischen, mechanischen oder sonstiger Eigenschaften an die jeweiligen Anforderungen ermöglichen.

**Stand der Technik**

Herkömmliche Verfahren, um Bauteile aus metallischen Massivgläser herzustellen, sind Gussverfahren. Diese werden zum Teil auch für metallische Massivglas-Kompositmaterialien verwendet. Aus dem Stand der Technik sind verschiedene Verfahren bekannt, mit denen sich metallische Massivglas-Kompositmaterialien herstellen lassen. Dazu zählen unter anderem das Ausfällungsverfahren, verschiedene Gussverfahren, starke plastische Verformung (Englisch: Sever plastic deformation (SPD)) und isostatisches Heißpressen (Englisch: hot isostatic pressing (HIP)).

Ausfällungsverfahren sind zum Beispiel aus Scientific Reports 3:2097 (DOI:10.1038/srep02097) bekannt. Darin werden Zirkon-Ausfällungen aus der Schmelze beschrieben, um den Sauerstoff aus einer metallischen Glasmatrix zu entfernen und zu binden. Aus Journal of Materials Volume 2013, Article ID 517904, (Titel: Bulk Metallic Glasses and Their Composites: A Brief History of Diverging Fields) sind diverse Legierungen bekannt, die beim Abkühlen aus der Schmelze dendritische Ausfällungen in einer metallischen Massivglasmatrix bilden.

Aus Science, Vol. 329, Nr. 5997, 2010, S. 1294-1295 sind diverse metallische Massivglas-Kompositmaterialien bekannt, die dendritische Strukturen aufweisen und mittels Schmelzguss hergestellt werden. Aus der Doktorarbeit mit dem Titel "Bulk metallic glass composites", (ETH Zürich, 2007, https://doi.org/10.3929/ethz-$\alpha$-005348591) sind metallische Massivglas-Komposite bekannt, die mit Graphitpartikeln verstärkt werden. Als Matrix dient hier die kommerziell erhältliche Legierung Vitralloy 105. Auch Kompositmaterialien, die ein metallisches Massivglas und eine nichtmetallische Komponente aufweisen, sind aus CN101967613B bekannt.

Scientific Reports, 7: 6651 (DOI:10.1038/s41598-017-06424-4) offenbart metallische Massivglas-Kompositmaterialien, die durch Torsion unter hohem Druck (Englisch: *high-pressure torsion* (HPT)) hergestellt werden. HPT ist ein Verfahren, bei dem eine Pulvermischung extrem hohen Scherkräften ausgesetzt wird, wodurch sich die Pulverpartikel miteinander verbinden. Das HPT-Verfahren wird auch SPD-Verfahren genannt. Ausgehend von Pulvern eines Zirkonbasierten metallischen Massivglases und kristallinen Kupferpartikeln werden durch HPT metallische Massivglas-Kompositmaterialen erzeugt. Es wird beschrieben, dass es auf diesem Weg möglich ist, amorph/kristalline Kompositmaterialien herzustellen, bei denen die Größen der jeweiligen Phasen vom Mikro- bis zum Nanometerbereich variiert werden können. Es werden metallische Glasphasen mit länglicher Form und einer Ausdehnung entlang der Scherrichtung von 100 $\mu$m und Breiten von 10 $\mu$m orthogonal zu der Scherrichtung beobachtet.

US7361239B2 offenbart metallische Massivglas-Kompositmaterialien, die ein metallisches Glas mit dem kristallinen Refraktärmetall Wolfram, kombinieren. Zur Herstellung wird isostatisches Heißpressen (hot isostatic pressing (HIP)) von Metallpulvern verwendet.

Der Stand der Technik hat mehrere Nachteile. Die Ausfällungsroute erfordert beispielsweise, eine Anpassung der Legierung, dahingehend, dass es zu einer Ausfällung einer primären Phase kommt, ohne dass dabei die Glasbildungsfähigkeit der Restschmelze derart vermindert wird, dass es nachfolgend zu keiner Ausbildung einer amorphen Matrix mehr kommt. Dadurch ist die Materialwahl zur Herstellung von Bauteilen bei diesem Verfahren sehr begrenzt. Die erzielbaren Geometrien der Bauteile sind dabei durch die Glasbildungsfähigkeit und durch Restriktionen konventioneller Herstellungsverfahren, z.B. der Abkühlgeschwindigkeit beim Kokillengussverfahren, limitiert.

Bei der Gussroute lassen sich nur Kombinationen realisieren, bei denen eine weitere Phase einen deutlich höheren Schmelzpunkt bzw. eine geringere Löslichkeit hat als die glasbildende Phase, da es sonst zum Auflösen der weiteren Phase in der Schmelze der glasbildende Phase käme. Dies kann entweder zu einer unerwünschten Veränderung der Eigenschaften der glasbildenden Phase führen oder sogar dazu, dass die Glasbildungseigenschaften der glasbildenden Phase komplett verloren gehen. Somit ist dieses Herstellungsverfahren für metallische Massivglaskomposite auf Materialkombinationen beschränkt, die weit auseinander liegende Schmelztemperaturen aufweisen.

Isostatisches Heißpressen hat den Nachteil, dass das Verfahren nur für Bauteile geeignet ist, die deutlich breitere Bauteiltoleranzen zulassen als sie mit anderen metallurgischen Verfahren, z.B Saugguss oder Druckguss erreichbar sind. Eine genaue Einstellung der Dimensionen des fertigen Bauteils ist entweder gar nicht oder nur durch großen Aufwand möglich. Weiterhin es nicht möglich 3D-Objekte mit komplexen Geometrien aus einem Stück zu fertigen, da hier zum Beispiel Bauteile mit Hinterschneidungen und Hohlräumen nicht mehr aus der Pressform entfernt werden können, ohne das Bauteil oder die Form zu zerstören.

Die Aufgabe der Erfindung war es, ein verbessertes Verfahren zur Herstellung eines metallischen Massivglas-Kompositmaterials bereitzustellen, das einen oder mehrere Nachteile des Stands der Technik überwindet.

Insbesondere war es eine Aufgabe, ein metallische Massivglas-Kompositmaterial bereitzustellen, das isotrope mechanische Eigenschaften aufweist.

Eine weitere, bevorzugte Aufgabe bestand darin, ein Verfahren zur Herstellung eines metallischen Massivglas-Kompositmaterial bereitzustellen, das über weite Bereiche einstellbare mechanische Eigenschaften aufweist.

Eine weitere, bevorzugte Aufgabe bestand darin, ein Verfahren bereitzustellen, das es erlaubt dreidimensionale Bauteile aus metallischem Massivglas-Kompositmaterial herzustellen, wobei die Bauteile komplexe Geometrien aufweisen. Komplexe Bauteilgeometrien können insbesondere Strukturen sein, die mindestens eine der folgenden Eigenschaften aufweisen:

- Hinterschneidungen oder innenliegende Hohlräume
- Geometrien mit großen Aspektverhältnissen (z.B Länge zu Durchmesser, Länge zu Breite, Länge zu Dicke).
- Bauteile mit integrierten Kanälen oder Durchführungen und
- Netz- oder Gitterstrukturen, insbesondere perkolierende Netzwerke.

Außerdem war es eine Aufgabe, ein Verfahren bereitzustellen, mit dem dreidimensionale Bauteile hergestellt werden können, die Abmessungen aufweisen, die größer sind als die maximal herstellbare Gussdicke.

Die maximale Gussdicke ergibt sich unter anderem aus der kritischen Abkühlrate eines Materials. Wird die kritische Abkühlrate unterschritten, kann es zur partiellen oder vollständigen Kristallisation der glasbildenden Legierung kommen.

Strukturen mit hohem Aspektverhältnis, wie z.B. Verstrebungen, lassen sich aufgrund der Fließfähigkeit stark gekühlter, metallischer Schmelzen nicht durch konventionellen Kokillenguss (z.B. Druck- oder Saugguss) herstellen, da es im Zuge der zur Glasbildung erforderlichen, raschen Erstarrung der Schmelzen zu einem starken Anwachsen der Viskosität kommt. Durch die erhöhte Viskosität kann die Schmelze nicht in enge Kanäle fließen.

Weiterhin bestand eine bevorzugte Aufgabe in der Bereitstellung eines metallischen Massivglas-Kompositmaterials, wobei das Material isotrope mechanische Eigenschaften aufweist. Isotrope Materialeigenschaften können die Konstruktion von dreidimensionalen Bauteilen erleichtern, weil die lokalen mechanischen Eigenschaften besser vorhersagbar sind.

Eine weitere bevorzugte Aufgabe bestand in der Bereitstellung eines dreidimensionalen Bauteils enthaltend ein metallisches Massivglas-Kompositmaterial, wobei das metallische Massivglas-Kompositmaterial mindestens zwei Phasen aufweist, deren Schmelzpunkte nicht mehr als 200°C, insbesondere nicht mehr als 150°C voneinander entfernt liegen.

**Beschreibung der Erfindung**

Mindestens eine der genannten Aufgaben wird gelöst durch ein Verfahren zur Herstellung eines metallischen Massivglas-Kompositmaterials, wobei das metallische Massivglas-Kompositmaterial mindestens zwei Phasen aufweist, wobei die erste Phase ein metallisches Massivglas ist und wobei mindestens eine weitere Phase ausgewählt ist aus der Gruppe bestehend aus kristallinem Metall, metallischem Glas, nicht-metallischem Glas und Keramik, dadurch gekennzeichnet, dass die Herstellung durch ein pulverbasiertes, additives Fertigungsverfahres erfolgt.

Ein Kompositmaterial wird auch als Verbundwerkstoff bezeichnet und ist ein Werkstoff aus zwei oder mehr miteinander verbundenen Materialkomponenten, wobei das Kompositmaterial andere Werkstoffeigenschaften besitzt als seine einzelnen Komponenten. Im Rahmen der Erfindung werden die verbundenen Materialien des Kompositmaterials auch als Phasen bezeichnet. Eine Phase ist ein räumlicher Bereich in einem Materialsystem, in dem die bestimmenden physikalischen Parameter und die chemische Zusammensetzung der Materie homogen sind.

Das metallische Massivglas-Kompositmaterial weist eine erste Phase und mindestens eine weitere Phase auf. Die erste Phase enthält ein metallisches Massivglas oder besteht aus einem metallischen Massivglas. Insbesondere ist die erste Phase eine kontinuierliche Phase, also eine zusammenhängende Phase, die in diesem Fall auch als Matrix bezeichnet werden kann. In der kontinuierlichen ersten Phase kann eine weitere Phase dispergiert sein. In einer alternativen Ausführungsform kann die erste Phase in dem metallischen Massivglas-Kompositmaterial auch diskontinuierlich vorliegen, also unterbrochenen in mehreren getrennten Bereichen.

Unter metallischen Massivgläsern sind Legierungen zu verstehen, die metallischen Bindungscharakter und gleichzeitig eine amorphe, also nicht-kristalline, Phase aufweisen. Die metallischen Massivgläser können auf unterschiedlichen Elementen basieren. "Basiert" meint in diesem Zusammenhang, dass das jeweils genannte Element auf das Gewicht der Legierung bezogen den größten Anteil darstellt. Typische Bestandteile, die bevorzugt auch die Basis der Legierung stellen, können ausgewählt sein aus:

     A. Metallen aus Gruppe I1 und IIA des Periodensystems, z.B. Magnesium, Calcium,
     B. Metallen aus Gruppe IIIA und IVA des Periodensystems, z.B. Aluminium oder Gallium,
     C. frühen Übergangsmetallen aus den Gruppen IVB bis VIIIB des Periodensystems, wie z.B. Titan, Zirkon, Hafnium, Niob, Tantal, Chrom, Molybdän, Mangan,
     D. späten Übergangsmetallen aus den Gruppen VIIIB, IB, IIB des Periodensystems, wie z.B. Eisen, Kobalt, Nickel, Kupfer, Palladium, Platin, Gold, Silber, Zink,
     E. Seltenerdmetallen, wie z.B. Scandium, Yttrium, Terbium, Lanthan, Cer, Neodym. Gadolinium und
     F. Nichtmetallen, wie z.B. Bor, Kohlenstoff, Phosphor, Silizium, Germanium, Schwefel

Bevorzugte Kombinationen von Elementen in metallischen Massivgläser sind ausgewählt aus:

•   Späten Übergangsmetallen und Nichtmetallen, wobei das späte Übergangsmetall die Basis darstellt, beispielsweise Ni-P, Pd-Si, Au-Si-Ge, Pd-Ni-Cu-P, Fe-Cr-Mo-P-C-B
•   Frühen und späten Übergangsmetallen, wobei beide Metalle die Basis darstellen können, wie z.B. Zr-Cu, Zr-Ni, Ti-Ni, Zr-Cu-Ni- Al, Zr-Ti-Cu-Ni-Be
•   Metalle aus Gruppe B mit Seltenerdmetallen, wobei das Metall B die Basis darstellt, wie z.B. Al-La, Al-Ce, Al-La-Ni-Co, La-(Al/Ga)-Cu-Ni
•   Metalle aus Gruppe A mit späten Übergangsmetallen, wobei das Metall A die Basis darstellt, wie z.B. Mg-Cu, Ca-Mg-Zn, Ca-Mg-Cu

Weitere, besonders bevorzugte Beispiele für Legierungen, die metallischen Massivgläser bilden, sind ausgewählt aus der Gruppe bestehend aus Ni-Nb-Sn, Co-Fe-Ta-B, Ca-Mg-Ag-Cu, C-oFe-B-Si-Nb, Fe-Ga-(Cr,Mo)(P,C,B), Ti-Ni-Cu-Sn, Fe-Co-Ln-B, Co-(Al,Ga)-(P,B,Si), Fe-B-Si-Nb und Ni-(Nb,Ta)-Zr-Ti.

Insbesondere kann das metallische Massivglas eine Zr-Cu-Al-Nb-Legierung sein. Bevorzugt weist diese Zr-Cu-Al-Nb-Legierung außer Zirkon zusätzlich 23,5 - 24,5 Gew. % Kupfer, 3,5 - 4,0 Gew. % Aluminium sowie 1,5 - 2,0 Gew. % Niob auf, wobei sich die Gewichtsanteile zu 100 Gew. % ergänzen. Kommerziell erhältlich ist die letztgenannte Legierung unter dem Namen AMZ4® von der Heraeus Deutschland GmbH.

Erfindungsgemäß enthält das metallische Massivglas-Kompositmaterial mindestens eine weitere Phase. Die mindestens eine weitere Phase kann aus einer Vielzahl von Materialien ausgewählt sein. Erfindungsgemäß kann die mindestens eine weitere Phase ausgewählt sein aus der Gruppe bestehend aus kristallinem Metall, metallischem Massivglas, nicht metallischem Glas und Keramik. Bevorzugt weist die mindestens eine weitere Phase einen Schmelzpunkt auf, der oberhalb des Schmelzpunktes der ersten Phase liegt.

Ein kristallines Metall ist ein klassisches Metall wie es aus der Werkstoffkunde bekannt ist. Die Abgrenzung als *kristallines* Metall wird lediglich vorgenommen, um klarzustellen, dass es sich hier nicht um ein metallisches Massivglas - auch amorphes Metall genannt - handelt. Ein kristallines Metall weist einen oder mehrere kristalline Bereiche mit eine Fernordnung auf und weist sowohl bezüglich der thermischen als auch bezüglich der elektrischen Leitfähigkeit metallisches Verhalten auf. Unter "kristallinen Metallen" sind vorliegend sowohl reine Metalle als auch Metalllegierungen zu verstehen. In dem erfindungsgemäßen Pulver kann als Metall ein reines Metall, mehrere Arten von reinen Metallen, eine Art von Metalllegierung, mehrere Arten von Metalllegierungen oder Mischungen davon enthalten sein. Im Rahmen der Erfindung bezieht sich der Begriff "reines Metall" auf ein elementar vorliegendes, chemisches Element, das im Periodensystem der Elemente in derselben Periode wie Bor, aber links von Bor, in derselben Periode wie Silizium, aber links von Silizium, in derselben Periode wie Germanium, aber links von Germanium, und in derselben Periode wie Antimon, aber links von Antimon steht, sowie auf alle Elemente, die eine höhere Ordnungszahl als 55 aufweisen.

Reine Metalle können auch unvermeidliche Verunreinigungen umfassen. Der Begriff "reine Metalle" schließt nicht aus, dass das Metall Verunreinigungen aufweist. Bevorzugt beträgt die Gesamtmenge an Verunreinigungen nicht mehr als 1 Gew. -%, insbesondere nicht mehr als 0,1 Gew.-% und ganz besonders bevorzugt nicht mehr als 0,01 Gew. -%, bezogen auf die Gesamtmenge an reinem Metall. In einer besonders bevorzugten Ausführungsform enthält das reine Metall keine absichtlich hinzugefügten Elemente.

In einer bevorzugten Ausführungsform kann das reine Metall ein Edelmetall sein. In einer besonders bevorzugten Ausführungsform ist das Edelmetall ein Platinmetall, Gold oder Silber. Das Platinmetall kann ausgewählt sein aus der Gruppe bestehend aus Platin, Iridium, Palladium, Ruthenium, Rhodium und Osmium.

In einer anderen bevorzugten Ausführungsform kann das reine Metall ein Refraktärmetall sein. Das Refraktärmetall kann im Rahmen der Erfindung ausgewählt sein aus Elementen der 4. Nebengruppe (z.B. Titan, Zirconium und Hafnium), der 5. Nebengruppe (z.B. Vanadium, Niob und Tantal) sowie der 6. Nebengruppe (z.B. Chrom, Molybdän und Wolfram).

In einer weiteren bevorzugten Ausführungsform kann das reine Metall ein Buntmetall oder Eisen sein. Das Buntmetall kann ausgewählt sein aus der Gruppe bestehend aus Cadmium, Kobalt, Kupfer, Nickel, Blei, Zinn und Zink.

Das Metall kann gemäß einer Ausführungsform eine Metalllegierung sein. Als Metalllegierungen werden erfindungsgemäß metallische Gemische aus wenigstens zwei Elementen verstanden, von denen wenigstens eins ein Metall ist. "Metallisch" meint in diesem Zusammenhang, dass unter den beteiligten Elementen vorwiegend ein metallischer Bindungscharakter vorliegt.

In einer bevorzugten Ausführungsform kann die Metalllegierung eine Edelmetalllegierung sein. In einer besonders bevorzugten Ausführungsform enthält die Edelmetalllegierung ein Element ausgewählt aus der Gruppe bestehend aus Platinmetallen, Gold und Silber.

Bevorzugte Platinmetalle in den Edelmetalllegierungen können ausgewählt sein aus der Gruppe bestehend aus Platin, Iridium, Palladium, Ruthenium, Rhodium und Osmium. In einer weiteren bevorzugten Ausführungsform kann die Edelmetalllegierung eine Legierung aus mindestens zwei dieser Platinmetalle sein (z.B. Platin-Iridium- oder Platin-Rhodium-Legierungen).

Die Metalllegierung kann bevorzugt Elemente enthalten, die ausgewählt sind aus Refraktärmetallen, Buntmetallen, Eisen sowie Kombinationen aus mindestens zwei dieser Metalle.

Besonders bevorzugte Metalllegierungen können außerdem ausgewählt sein aus Aluminiumlegierungen, Kupferlegierungen, Nickelbasislegierungen, Kobaltbasislegierungen, Titan-Aluminium-Legierungen, Kupfer-Zinn-Legierungen, Edelstahllegierungen, Werkzeugstahllegierungen und Superlegierungen für Hochtemperaturanwendungen.

Weiterhin kann die mindestens eine weitere Phase ein metallisches Massivglas mit anderer chemischer Zusammensetzung und anderen physikalischen Eigenschaften als die erste Phase sein. Beispielsweise kann die erste Phase ein Zirkon-basiertes metallisches Massivglas sein und die mindestens eine weitere Phase ein Titan-basiertes metallisches Massivglas.

In einer anderen bevorzugten Ausführungsform kann die weitere Phase ein nicht-metallisches Glas sein. Unter einem nicht-metallischen Glas ist im Rahmen der Erfindung ein anorganisches amorphes Material zu verstehen, das keinen metallischen Bindungscharakter aufweist. Die Gläser können oxidische Gläser sein. Oxidische Gläser können ausgewählt sein aus der Gruppe bestehend aus Silikatgläsern, Boratgläsern, Phosphatgläsern. Die Bezeichnung dieser bevorzugten oxidischen Gläser gibt jeweils an, welche Komponente, auf das Gewicht bezogen, am häufigsten vorkommt. Zum Beispiel ist Silikat ($SiO_4^{4-}$) die häufigste Komponente in Silikatgläsern. Jede der genannten Arten von Gläsern kann weitere Elemente als Oxide enthalten, wobei diese weiteren Elemente bevorzugt ausgewählt sein können aus Alkalimetallen, Erdalkalimetallen, Aluminium, Bor, Blei, Zink und Titan.

In einer möglichen Ausführungsform der Erfindung kann die mindestens eine weitere Phase eine Keramik sein. Unter Keramiken sind im Kontext der Erfindung kristalline, anorganische Materialien zu verstehen, die keinen metallischen Charakter aufweisen. In einer bevorzugten Ausführungsform kann die Keramik natürliche Mineralien umfassen. Die Keramik kann beispielsweise ausgewählt sein aus der Gruppe bestehend aus Oxidkeramiken, Nitridkeramiken, Carbidkeramiken sowie Mischformen von mindestens zwei dieser Keramiken. Die Oxidkeramiken können bevorzugt Oxide der Elemente aufweisen, die ausgewählt sind aus der Gruppe bestehend aus Magnesium, Calcium, Aluminium, Silizium, Titan, Zirkon und Zink. Die Oxidkeramik kann reine Elementoxide oder Mischoxide umfassen. In einer bevorzugten Ausführungsform sind die Elementoxide ausgewählt aus der Gruppe bestehend aus Magnesiumoxid, Calciumoxid, Aluminiumoxid, Siliziumoxid, Titanoxid, Zirkonoxid und Zinkoxid. In einer anderen bevorzugten Ausführungsform enthalten die Mischoxide mindestens zwei der Elemente die ausgewählt sind aus der Gruppe bestehend aus Magnesium, Calcium, Aluminium, Silizium, Titan, Zirkon und Zink. Optional können die Mischoxide weitere Elemente enthalten, die ausgewählt sind aus der Gruppe bestehend aus den Elementen der 3. bis 6. Hauptgruppe des Periodensystems der Elemente.

Das aus dem erfindungsgemäßen Verfahren resultierende, metallische Massivglas-Kompositmaterial, weist mindestens zwei Phasen auf, wobei die erste Phase ein metallisches Massivglas ist und wobei mindestens eine weitere Phase ausgewählt ist aus der Gruppe bestehend aus kristallinem Metall, metallischem Massivglas, nicht metallischem Glas und Keramik. Das resultierende, metallische Massivglas-Kompositmaterial kann auch mehr als eine weitere Phase aufweisen, wobei jede weitere Phase ausgewählt ist aus der Gruppe der Materialien der mindestens einen weiteren Phase.

Je nach erforderlicher Anwendung können die folgenden Kombinationen aus erster Phase und mindestens einer weiteren Phase bevorzugt sein:

1) Kombinationen aus metallischem Massivglas und duktiler, kristalliner Phase (z.b Cu, Nb, Nb-Zr, können zu einer verbesserten Duktilität des Kompositmaterials führen.

2) Kombinationen aus metallischem Glas und harter Phase (z.B. W, WC, SiC,) können zu einer verbesserten Verschleißbeständigkeit führen.

3) Kombinationen aus metallischem Glas und leitendem Material (z.B. Kupfer oder Aluminium sowie Legierungen dieser Metalle) können zu einer verbesserten elektrischen oder thermischen Leitfähigkeit führen.

Der Nachweis, dass das metallische Massivglas-Kompositmaterial eine erste amorphe Phase aufweist, kann beispielsweise mittels Differential Scanning Calorimetry (DSC) geführt werden. Wenn das metallische Massivglas-Kompositmaterial eine amorphe Phase enthält, kann in der DSC-Messung mit zunehmender Temperatur zuerst ein endothermes Signal für den Glasübergang beobachtet werden und mit weiter zunehmender Temperatur ein exothermes Signal für die Kristallisation. Ein endothermes Signal bedeutet, dass das Material, insbesondere das Kompositmaterial, Wärme aufnimmt während ein exothermes Signal bedeutet, dass das Material, insbesondere das Kompositmaterial, Wärme freisetzt. Dieses Verhalten in der DSC-Messung kann auch für das reine Material der ersten Phase beobachtet werden. Ein kristallines Metall weist hingegen im DSC keine Signale auf, die einem Glasübergang oder einer Kristallisation zuzuordnen wären. Eine amorphe Phase kann sich ebenfalls weiterhin mittels Elektronenmikroskopie (REM, TEM) sowie Röntgendiffraktometrie nachweisen lassen. In einer bevorzugten Ausführungsform ist unter einem metallischen Glas eine Phase zu verstehen, die zu mindestens 50%, insbesondere zu mindestens 70% und ganz besonders bevorzugt zu mindestens 90% amorph ist.

Das Gewichtsverhältnis zwischen der ersten Phase und der mindestens einen weiteren Phase ist erfindungsgemäß nicht weiter beschränkt. Bevorzugt beträgt der Anteil der ersten Phase mindestens 50 Gew.-% oder mehr, insbesondere 70 Gew.-% oder mehr und ganz besonders bevorzugt 90 Gew.-% oder mehr. Dadurch kann erreicht werden, dass das metallische Massivglas-Kompositmaterial möglichst viele der vorteilhaften Eigenschaften des reinen metallischen Massivglases behält.

In einer alternativen Ausführungsform kann der Gewichtsanteil der ersten Phase an dem gesamten metallischen Massivglas-Kompositmaterial weniger als 50 Gew.-%, insbesondere weniger als 25 Gew.-% und ganz besonders bevorzugt weniger als 10 Gew.-% betragen. Durch die Einstellung unterschiedlicher Gewichtsanteile der ersten Phase und der mindestens einen weiteren Phase, können die Materialeigenschaften des erhältlichen metallischen Massivglas-Kompositmaterials gezielt eingestellt werden.

Erfindungsgemäß enthält das metallische Massivglas-Kompositmaterial mindestens eine weitere Phase. Die mindestens eine weitere Phase kann kontinuierlich oder diskontinuierlich vorliegen. Wenn die mindestens eine weitere Phase diskontinuierlich vorliegt, finden sich in der Matrix aus metallischem Massivglas eine Vielzahl von vereinzelten Bereichen dieser weiteren Phase. Wenn die mindestens eine weitere Phase kontinuierlich vorliegt, kann diese ein Netz, insbesondere eine durchgängig zusammenhängende Netzwerkstruktur, ausbilden. Die mindestens eine weitere Phase kann fein dispergiert in der Matrix der ersten Phase vorliegen oder agglomeriert sein. Agglomeriert bedeutet, in diesem Zusammenhang, dass die Bereiche der mindestens einen weiteren Phase zumindest teilweise in Kontakt miteinander stehen.

Bevorzugt kann das metallische Massivglas-Kompositmaterial isotrope mechanische Eigenschaften aufweisen. Isotrop heißt, dass die Materialeigenschaften richtungsunabhängig sind. Isotrope Materialeigenschaften können insbesondere dann erhalten werden, wenn sphärische oder annähernd sphärische Pulver zur Erzeugung der ersten Phase und der mindestens einen weitere Phase verwendet werden. Dies ist ein besonderer Vorteil des erfindungsgemäßen Verfahrens gegenüber Scherverfahren (SPD), bei denen zwar auch Pulver mit nah beieinanderliegenden Schmelztemperaturen zu metallischen Massivglas-Kompositmaterial verarbeitet werden können, mit denen aber keine isotropen mechanischen Eigenschaften erreicht werden. Dies liegt insbesondere an der Richtung der Scherung bei solchen SPD-Verfahren.

Bevorzugt weisen die erste Phase und die mindestens eine weitere Phase Schmelztemperaturen auf, die nicht mehr als 200°C, insbesondere nicht mehr als 150°C auseinander liegen. Besonders bevorzugt weist die mindestens eine weitere Phase eine höhere Schmelztemperatur auf als die erste Phase.

Bevorzugt weist das metallische Massivglas-Kompositmaterial eine relative Dichte von 95% oder mehr auf, insbesondere mehr als 97%, bezogen auf die theoretisch erreichbare Materialdichte aller enthaltenen Feststoffe.

Erfindungsgemäß erfolgt die Herstellung des metallischen Massivglas-Kompositmaterials durch ein pulverbasiertes, additives Fertigungsverfahren. Das Grundprinzip eines pulverbasierten, additiven Fertigungsverfahrens umfasst bevorzugt zumindest die folgenden Schritte.

1) Zuerst wird eine dünne Schicht eines Pulvers erzeugt.

2) Anschließend wird die Pulverschicht mit energiereicher Strahlung erhitzt, sodass die einzelnen Partikel der Pulverschicht sich in dem erhitzten Bereich miteinander verbinden, insbesondere verschmelzen, wodurch eine zusammenhängende Materialschicht erhalten werden kann.

3) Optional kann im nächsten Schritt auf der zuvor erzeugten Materialschicht eine weitere Pulverschicht aufgetragen werden.

4) Analog zu Schritt 2) wird auch die weitere aufgetragene Pulverschicht mit energiereicher Strahlung erhitzt, sodass sich die Partikel des Pulvers in dem erhitzten Bereich zu einer weiteren zusammenhängenden Materialschicht verbinden, insbesondere verschmelzen.

5) Optional kann durch wiederholtes Erzeugen und Aufeinanderstapeln von beliebig vielen weiteren Materialschichten ein metallisches Massivglas-Kompositmaterial beliebiger Dicke erhalten werden.

6) Nach Fertigstellung des Bauteils kann loses, nicht erhitztes Pulver, das nicht Teil einer Materialschicht ist, vom Bauteil entfernt werden.

Bevorzugt wird in Schritt 1) die Schicht eines Pulvers auf einer Grundplatte, auch Bauplatte genannt, aufgetragen. Die Schichtdicke der dünnen Schichten des Pulvers, bzw. der Pulvermischung, liegt bevorzugt im Bereich von 5 $\mu$m bis 500 $\mu$m. Die Grundplatte, beziehungsweise die Baukammer, in der die Pulverschicht aufgetragen wird, kann optional beheizbar sein. Das Auftragen der Pulverschicht erfolgt bevorzugter Weise durch Rakeln oder Rollen.

In Schritt 2) wird die zuvor erzeugte Pulverschicht erhitzt. Bevorzugt erfolgt das Erhitzen mit energiereicher Strahlung selektiv in einem vordefinierten Bereich. In einer bevorzugten Ausführung stellt bereits die Erzeugung einer einzelnen Materialschicht aus einer einzelnen Pulverschicht ein pulverbasiertes, additives Fertigungsverfahren dar. Abhängig von der konkreten Ausführung können verschiedene pulverbasierte, additive Fertigungsverfahren verwendet werden. Wird das Pulver mittels Laserstrahlung erhitzt, spricht man von Selective Laser Melting (SLM). Wird das Pulver hingegen mittels Elektronenstrahlung erhitzt, spricht man von Electron Beam Melting (EBM). Das EBM-Verfahren wird bevorzugt unter Vakuum durchgeführt. SLM erfolgt bevorzugt unter einer Inertgasatmosphäre, z.B. einer Stickstoff- oder Argonatmosphäre. Die Laserstrahlung, die bei dem SLM-Verfahren verwendet wird, ist erfindungsgemäß nicht weiter beschränkt und kann verschiedenen Wellenlängen und Leistungen aufweisen. Bevorzugt weist die verwendete Laserstrahlung eine Wellenlänge im Bereich von 400 nm - 10 $\mu$m auf, bevorzugt im Infrarot-Bereich von 800 nm - 10 $\mu$m. Die Laserstrahlung kann gepulst oder kontinuierlich sein. Besonders bevorzugt wird die Laserstrahlung durch einen Yb-Faserlaser mit einer Wellenlänge im Infrarotbereich, z.B. bei ca. 1060 nm erzeugt. Bei Frequenzverdopplung des Yb-Faserlasers kann beispielsweise eine Wellenlänge von ca. 530 nm verwendet werden. Auch die Laserleistung ist erfindungsgemäß nicht weiter beschränkt. Bevorzugt ist die Laserleistung jedoch so hoch, dass zumindest eine Phase des metallischen Massivglases dadurch geschmolzen werden kann. Bevorzugt erfolgt das Erhitzen der Pulverschicht mittels energiereicher Strahlung selektiv in einem vordefinierten Bereich.

In Schritt 3) wird analog zur ersten Schicht eine weitere Pulverschicht erzeugt, die auf der ersten Materialschicht angeordnet ist. Die Schichtdicke der dünnen Schichten eines Pulvers, bzw. einer Pulvermischung, liegt bevorzugt im Bereich von 5 $\mu$m bis 500 $\mu$m.

In Schritt 4) wird die weitere optionale Pulverschicht mit energiereicher Strahlung erhitzt. Die erhaltene weitere Materialschicht ist bevorzugt nicht nur in sich zusammenhängend sondern ist auch mit der darunter liegenden Materialschicht verbunden. Bevorzugt erfolgt das Erhitzen der weiteren Pulverschicht ebenfalls selektiv in vordefinierten Bereichen.

Durch wiederholtes Auftragen weiterer Materialschichten kann ein metallisches Massivglas-Kompositmaterial erhalten werden, das eine deutlich höhere Dicke aufweist als die maximale Gussdicke. Bevorzugt erfolgt das Erhitzen in den Schritt 2), 4) sowie sämtlichen weiteren optionalen Schritten mit energiereicher Strahlung selektiv in einem vordefinierten Bereich. Dadurch lassen sich einzelne Materialschichten mit komplexen Konturen erzeugen. Durch Stapeln mehrerer Materialschichten mit komplexen Konturen können fertige dreidimensionale Bauteile aus dem metallischen Massivglas-Kompositmaterial hergestellt werden. Die Information, wie eine einzelne Pulverschicht selektiv erhitzt werden muss, um eine Materialschicht zu erhalten, wird typischer Weise durch einen Computer errechnet. Dazu wird ein virtuelles Modell eines zu fertigenden Bauteils in beliebig viele Schnitte zerlegt, die in ihrer Summe das fertige Bauteil ergeben. Durch selektives Erhitzen der jeweiligen Pulverschichten gemäß einer vordefinierten Formkontur kann durch das Verfahren bevorzugt ein fertiges dreidimensionales Bauteil zusammengesetzt werden, insbesondere ein Bauteil, das direkt und ohne Nachbehandlung in einer technischen Anwendung verwendet werden kann.

In Schritt 6) wird üblicher Weise das lose Pulver entfernt. Optional kann das erhaltene Kompositmaterial oder das erhaltene Bauteil nach Beendigung des Verfahrens nachbehandelt werden, z.B. durch Oberflächenbehandlung wie Sandstrahlen oder isostatische Heißpressen. Optional kann das erhaltene Bauteil auch mit subtraktiven Verfahren, wie z.B. Schleifen und Fräsen, nachbehandelt werden.

Grundsätzlich sind Vorrichtungen zur Durchführung eines pulverbasierten, additiven Fertigungsverfahrens meist ähnlich aufgebaut. Die für das Verfahren verwendbaren Anlagen und Vorrichtungen sind dem Fachmann bekannt.

Zur Verwendung in dem pulverbasierten, additiven Fertigungsverfahren werden als Vorläufer für die erste Phase bevorzugt Pulver eingesetzt. Zur Verwendung in dem pulverbasierten additiven Fertigungsverfahren werden als Vorläufer für die mindestens eine weitere Phase Pulver oder Netzstrukturen eingesetzt. Wenn in dem erfindungsgemäßen Verfahren Pulver verwendet werden, kann die Morphologie dieser Pulverpartikel bevorzugt annähernd sphärische Formen, Stäbchen, Ellipsoide, Fasern, Flocken, Plättchen oder Mischungen der vorgenannten Formen umfassen. Unter annähernd sphärischen Formen sind solche zu verstehen, bei denen mindestens 80% der Partikel der folgenden Bedingung erfüllen:

$$0,8 \leq d_{min}/d_{max} \leq 1,0;$$

wobei $d_{min}$ der minimale Durchmesser und $d_{max}$ der maximale Durchmesser eines Partikels sind.

Die in dem Verfahren verwendeten Pulver lassen sich auf vielfältige Weise herstellen. Die geeigneten Verfahren sind dem Fachmann für Pulverherstellung bekannt.

In einer bevorzugten Ausführung der Erfindung weisen die Pulver eine Partikelgrößenverteilung $d_{50}$ im Bereich von 1 $\mu$m bis 200 $\mu$m auf. Bevorzugt weisen die Pulver eine Partikelgrößenverteilung im Bereich von $\geq$10 $\mu$m bis $\geq$45 $\mu$m oder $\geq$20 $\mu$m bis $\geq$65 $\mu$m auf, wobei der untere Wert des Wertebereichs jeweils den $d_2$-Wert angibt und der obere Wert jeweils den $d_{90}$-Wert.

Das jeweilige Pulver kann als Trockendispersion mittels Laserbeugungs-Partikelgrößenanalyse gemäß der ISO 13320:2009 vermessen werden und aus den Messdaten kann die Volumenverteilungssummenkurve bestimmt werden. Aus der Volumenverteilungskurve lassen sich gemäß ISO 9276-2:2014, die Werte $d_2$, $d_{50}$ und $d_{90}$ errechnen.

Bevorzugt weisen alle für die Erfindung verwendeten Pulver eine Fließfähigkeit auf, die ausreicht, um die Pulver mit einer Rakel als homogene Schicht aufzutragen.

Bevorzugt umfasst das pulverbasierte, additive Fertigungsverfahren die Verwendung einer Pulvermischung aus mindestens zwei Pulvern. Bevorzugt wird für das erfindungsgemäße Verfahren mindestens ein erstes Pulver eines metallischen Massivglases und mindestens ein weiteres Pulver verwendet. In einer besonders bevorzugten Ausführung der Erfindung kann in dem pulverbasierten, additiven Fertigungsverfahren auch eine Mischung aus mindestens einem Pulver und einer oder mehrerer Netzstrukturen verwendet werden, wobei in dieser Ausführungsform mindestens ein Pulver eines metallischen Massivglases verwendet wird. Im Rahmen der Erfindung können die Pulver beziehungsweise Netzstrukturen als Vorläufer für die mindestens eine weitere Phase des metallischen Massivglas-Kompositmaterials verwendet werden. Je nach Ausgestaltung der verwendeten Netze und der genauen Verwendung in dem erfindungsgemäßen Verfahren können die Netze dazu führen, dass die mechanischen Eigenschaften des metallischen Massivglas-Kompositmaterials, beziehungsweise des dreidimensionalen Bauteils, anisotrop sind. Diese in das Kompositmaterial eingebetteten Netzstrukturen können dazu genutzt werden, um dem Kompositmaterial bzw. dem daraus resultierenden, dreidimensionalen Bauteil gezielt richtungsabhängige Eigenschaften zu verleihen. Zur Verwendung in dem pulverbasierten, additiven Fertigungsverfahren kann als Vorläufer für die erste Phase ein Pulver aus den eingangs beschriebenen Materialien für die erste Phase verwendet werden. Zur Verwendung in dem pulverbasierten, additiven Fertigungsverfahren kann als Vorläufer für die mindestens eine weitere Phase ein Pulver aus den eingangs beschriebenen Materialien für mindestens eine weitere Phase verwendet werden.

In einer besonders bevorzugten Ausführungsform wird für das pulverbasierte, additive Fertigungsverfahren eine Pulvermischung eines Pulvers aus einem metallischem Massivglas und mindestens einem Pulver aus einem weiteren Material verwendet, wobei das mindestens eine weitere Material dem Material der mindestens einen weiteren Phase entspricht.

Bevorzugt weisen die verwendeten Pulver, insbesondere in der Pulvermischung, für die Verwendung in dem pulverbasierten, additiven Fertigungsverfahren bei der Einwirkung von energiereicher Strahlung, insbesondere der selben Strahlung, jeweils unterschiedliches Schmelzverhalten auf. Energiereiche Strahlung kann elektromagnetische Strahlung oder Elektronenstrahlung sein. Insbesondere weisen die unterschiedlichen Pulver für die Verwendung in dem pulverbasierten, additiven Fertigungsverfahren unterschiedliche Absorptionskoeffizienten für elektromagnetische Strahlung auf. Bevorzugt kann die elektromagnetische Strahlung Infrarotstrahlung umfassen. Unter Infrarotstrahlung ist elektromagnetische Strahlung im Wellenlängenbereich von 800 nm-10 $\mu$m, z. B. 1064 nm, zu verstehen. Das unterschiedliche Schmelzverhalten unter Einwirkung von elektromagnetischer Strahlung kann auf unterschiedliche Transmissions- und/oder Reflektionseigenschaften zurückzuführen sein. In einer alternativen Ausführung kann das Schmelzverhalten unter Einwirkung von energiereicher Strahlung auch auf andere physikalische Eigenschaften, z.B. unterschiedliche elektrische oder thermische Leitfähigkeiten, zurückzuführen sein. Durch diese Verwendung von Pulvermaterialien mit unterschiedlicher Wechselwirkung mit elektromagnetischer Strahlung oder durch Verwendung von Pulvern mit unterschiedlicher Leitfähigkeit können Materialien zu metallischen Massivglas-Kompositmaterialien verarbeitet werden, die eng beieinander liegende Schmelzpunkte aufweisen. Das bedeutet, dass beispielsweise unter Einwirkung von Laserstrahlung das Pulver zur Herstellung des metallischen Massivglases schmelzen kann, während das Pulver zur Herstellung der mindestens einen weiteren Phase fest bleiben kann. Bevorzugt erfolgt das Erhitzen der Pulver so kurz und die Dissipation der Wärme ist so hoch, dass bevorzugt nur das Pulver zur Herstellung der ersten Phase schmilzt während das Pulver zur Herstellung von der mindestens einen weiteren Phase teilweise oder vollständig fest bleibt. Insbesondere ist es bevorzugt, dass sich das Material, insbesondere ein Pulver, zur Herstellung der mindestens einen weiteren Phase zumindest nicht vollständig in der Schmelze des Materials der ersten Phase auflöst. Ein Beispiel für eine solche Materialkombination mit nahe beieinander liegenden Schmelztemperaturen ist die kommerzielle Legierung AMZ4 von Heraeus Additive Manufacturing GmbH (Smp.915°C) und Kupfer (Smp. 1085°C). Die Schmelztemperaturen dieser Materialien liegen nur 170°C auseinander. Würde man versuchen ein metallisches Massivglas-Kompositmaterial dieser Materialien durch Gussverfahren herzustellen, würde das Kupfer in der Schmelze der Legierung schmelzen oder sich auflösen.

Aus dem erfindungsgemäßen metallischen Massivglas-Kompositmaterial lassen sich auf unterschiedliche Weise dreidimensionale Bauteile herstellen. Bevorzugt enthält das resultierende Bauteil ein metallisches Massivglas-Kompositmaterial oder es besteht daraus.

Erfindungsgemäß ist das dreidimensionale Bauteil in seiner Geometrie und Ausdehnung nicht weiter beschränkt. Bevorzugt ist der dreidimensionale Körper ohne Materialübergänge, also einteilig, ausgebildet. In einer bevorzugten Ausführungsform ist der dreidimensionale Körper massiv, weist also keine eingeschlossenen Hohlräume auf. In einer anderen bevorzugten Ausführung kann der dreidimensionale Körper innenliegende Hohlräume, wie z.B. Kanäle, Durchführungen, etc., aufweisen.

Im einfachsten Fall kann das dreidimensionale Bauteil, das mit dem erfindungsgemäßen Verfahren herstellbar ist, aus einer einzigen Materialschicht bestehen, die durch ein pulverbasiertes, additives Fertigungsverfahren aus einer einzigen Pulverschicht erzeugt wurde.

In einer alternativen Ausführungsform kann durch Aufeinanderschichten von beliebig vielen Materialschichten ein Vorläufer für ein dreidimensionales Bauteil aus dem erfindungsgemäßen metallischen Massivglas-Kompositmaterial erzeugt werden. Dieser Vorläufer aus dem erfindungsgemäßen metallischen Massivglas-Kompositmaterial, der auch als Rohling angesehen werden kann, kann anschließend mit bekannten Fertigungsverfahren, wie z.B. subtraktiven Verfahren (Fräsen oder Schneiden), zu einem fertigen dreidimensionalen Bauteil aus dem erfindungsgemäßen metallischen Massivglas-Kompositmaterial verarbeitet werden. Alternativ kann ein Rohling auch durch thermoplastisches Formen weiter bearbeitet werden.

Es ist jedoch bevorzugt das erfindungsgemäße pulverbasierte, additive Fertigungsverfahren parallel zur Erzeugung des Kompositmaterials auch zur Erzeugung eines dreidimensionalen Bauteils zu verwenden. Das bedeutet, dass beim Erzeugen der jeweiligen Materialschichten die Konturen so gewählt werden, dass die zusammengesetzten Materialschichten bereits das fertige dreidimensionale Bauteil ergeben.

Wird ein erfindungsgemäßes pulverbasiertes, additives Fertigungsverfahren zur Herstellung von dreidimensionalen Bauteilen verwendet, lassen sich gegenüber anderen Verfahren dreidimensionale Bauteile aus metallischen Massivglas-Kompositmaterialien erzeugen, die besonders komplexe Geometrien aufweisen oder besonders große Dicken aufweisen, die über den maximal erreichbaren Gussdicken, auch kritischen Abgussdicken genannt, liegen.

Komplexere Geometrien lassen sich mit dem pulverbasierten, additiven Fertigungsverfahren insbesondere dadurch erzeugen, dass mehrere Materialschichten des erfindungsgemäßen Kompositmaterials zusammen gesetzt werden, wobei jede Materialschicht durch selektives erhitzen eine Pulverschicht in einem vordefinierten Bereich erzeugt wird. Durch das Zusammensetzen von aufeinanderfolgenden Materialschichten mit komplexen Konturen lassen sich somit komplexe dreidimensionale Bauteile erzeugen. Typischer Weise werden die einzelnen Materialschichten mit komplexen Konturen dadurch erhalten, dass ein virtuelles Modell des Bauteils in eine bestimmte Anzahl von Schnitten zerlegt wird, sodass jeder einzelne Schnitt durch das Bauteil als Materialschicht hergestellt werden kann.

Insbesondere sind mit dem erfindungsgemäßen Verfahren dreidimensionale Bauteile aus einem metallischen Massivglas-Kompositmaterial erhältlich, die Hinterschneidungen aufweisen. Hinterschneidungen sind mittels Gussverfahren nicht oder nur sehr schwer herzustellen, da die fertigen Bauteil nicht aus der Gussform entfernt werden können. Ein einfaches Beispiel einer Hinterschneidung kann ein Haken sein, der nicht aus einer einteiligen Gussform entfernt werden kann. Beispielsweise sind mit dem erfindungsgemäßen Verfahren auch einteilige Bauteile mit Hohlräumen möglich. Insbesondere kann ein erfindungsgemäßes Bauteil auch Strukturen mit einem hohen Aspektverhältnis aufweisen. Beispielsweise kann das Aspektverhältnis 20 oder mehr betragen. Das Aspektverhältnis ist das Verhältnis der größten Ausdehnungsrichtung einer Struktur zur kleinsten Ausdehnungsrichtung einer Struktur. Beispielsweis lassen sich mit dem erfindungsgemäßen Verfahren Gitter oder Netzstrukturen herstellen, die mit anderen Verarbeitungsverfahren für metallische Massivglas-Kompositmaterialien nicht zugänglich sind. Zum Beispiel lassen sich durch pulverbasierte, additive Fertigungsverfahren auf einfache Weise Bauteile aus metallischen Massivglas-Kompositmaterialien herstellen, die in mindestens einer Ausdehnungsrichtung, insbesondere in zwei Ausdehnungsrichtungen, Abmessungen von 100 - 500 $\mu$m aufweisen, während eine andere, insbesondere eine dritte, Ausdehnungsrichtung Abmessungen von einem Zentimeter oder mehr aufweist.

Ein besonderer Vorteil des pulverbasierten, additiven Fertigungsverfahrens besteht darin, dass das erzeugbare Bauteil in seiner Ausdehnung nicht auf die maximalen Gussdicken beschränkt ist. Insbesondere bietet das Verfahren die Möglichkeit einer flexiblen Konstruktion von Bauteilen, die mit anderen Verarbeitungsverfahren für metallische Massivglaskomposite nicht möglich sind.

Weiterhin betrifft die Erfindung ein dreidimensionales Bauteil, aus einem metallischen Massivglas-Kompositmaterial aufweisend eine erste Phase enthaltend ein metallisches Massivglas und mindestens eine weitere Phase, dadurch gekennzeichnet, dass das metallischen Massivglas-Kompositmaterial isotrope mechanische Eigenschaften aufweist und die Schmelztemperaturen der ersten und der mindestens einen weiteren Phase nicht mehr als 200°C voneinander entfernt sind.

Grundsätzlich ist die Anwendung des metallischen Massivglas-Kompositmaterials, das gemäß dem erfindungsgemäßen Verfahren hergestellt wurde, nicht weiter begrenzt. In einer bevorzugten Ausführung kann das metallische Massivglas-Kompositmaterialien in denjenigen Anwendungen eingesetzt werden, die dem Fachmann auch für metallische Massivgläser geeignet scheinen. Bevorzugte Anwendungen des metallischen Massivglas-Kompositmaterials sind solche, die verschleißfreie und/oder hochfeste Bauteile erfordern. Besonders bevorzugte Anwendungen für das metallische Massivglas-Kompositmaterial sind z.B. ausgewählt aus Zahnrädern, Federn, Gehäusen, Uhrenkomponenten und Medizintechnikanwendungen (z.B. Prothesen).

**Beispiel**

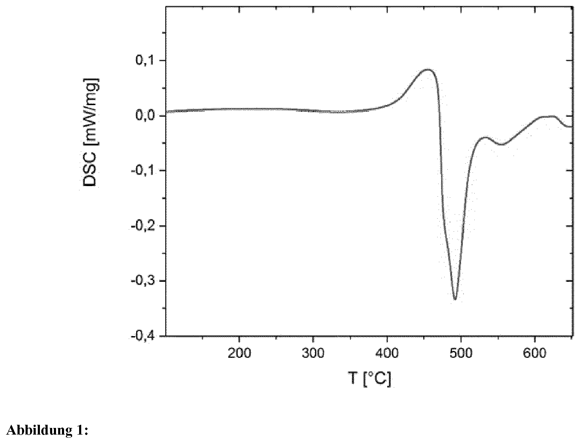

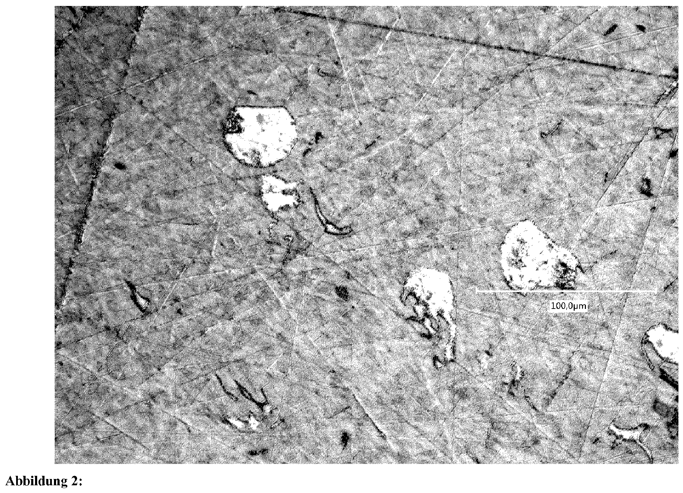

Zur Herstellung eines beispielhaften metallischen Massivglas-Kompositmaterials wurden die folgenden Pulver bereitgestellt: 1) AMZ4 (eine ZrCu-AlNb-Legierung, Heraeus Additive Manufacturing GmbH, Deutschland), 2) Kupferpulver. Die Partikelgröße $d_{50}$ der AMZ4-Fraktion betrug = 22 $\mu$m und die der Kupferpulverpartikel $d_{50}$ = 25 $\mu$m. Die beiden Pulver wurden zu einer homogenen Pulvermischung verarbeitet, wobei diese Mischung 90 Gew.-% AMZ4-Pulver und 10 Gew.-% Kupferpulver enthielt. Mittels selektivem Laserschmelzen (SLM) wurden die Pulver schichtweise zu einen metallischen Massivglas-Kompositmaterial verarbeitet. Dabei wurde die Laserleistung so gewählt, dass die Pulverpartikel der AMZ4-Legierung schmolzen, während die Pulverpartikel aus Kupfer fest blieben. Die Laserleistung betrug in diesem Fall P=50 W, die Scangeschwindigkeit 3000 mm/s und die Linienbreite etwa 45 $\mu$m. Mit Hilfe der angegebenen Parameter wurde ein Würfel mit einer Kantenlänge von 1 cm gefertigt. Von der erhaltenen Probe wurde ein Schliff angefertigt, indem mit einer Diamantsäge ein Schnitt durch den Würfel gemacht wurde und die Schnittfläche geschliffen und poliert wurde. Die Schlifffläche wurde mittels optischer Mikroskopie untersucht. Das Ergebnis ist in Abbildung 2 zusehen. Die dunklen Bereiche sind der ersten, amorphen Phase zuzuordnen während die hellen Bereiche die Kupfer-Phase darstellen. Außerdem wurde ein Teil des erhaltenen metallischen Massivglas-Kompositmaterials mittels DSC vermessen. Dazu wurde mit einer Diamantsäge ein dünnes Plättchen von etwa 50 mg von dem Würfel abgeschnitten. Die DSC-Messung wurde mit einer Heizrate von 20K/min in einem Temperaturbereich von Raumtemperatur bis 650°C durchgeführt. Das Ergebnis der DSC-Messung ist in Abbildung 1 dargestellt. Wie zu erkennen ist, weist die Messung mit zunehmender Temperatur zuerst ein endothermes Signal auf, das typisch ist für den Glasübergang und anschließend eine exothermes Signal, das typisch ist für den Kristallisationsvorgang der vormals amorphen Phase. Diese Messung dient als Nachweis, dass in dem metallischen Massivglas-Kompositmaterial eine amorphe Phase vorliegt. Im Vergleich wäre in einer DSC-Messung eines kristallinen Metalls weder einen Glasübergang noch eine Kristallisation zu erkennen.

**Beschreibung der Zeichnungen**

Abbildung 1: DSC-Messung eines erfindungsgemäß hergestellten, metallischen Massivglas-Kompositmaterials.

Abbildung 2: Optische Mikroskopieaufnahme eines Schliffbildes eines metallischen Massivglas-Kompositmaterials. Die dunklen Bereiche zeigen die erste Phase aufweisend ein metallisches Massivglas und die hellen Bereiche zeigen eine weitere Phase eines Metalls (hier Kupfer), das in der ersten Phase dispergiert ist.

**Patentansprüche**

1. Verfahren zur Herstellung eines metallischen Massivglas-Kompositmaterials, wobei das metallische Massivglas-Kompositmaterial mindestens zwei Phasen aufweist, wobei die erste Phase ein metallisches Massivglas ist und wobei mindestens eine weitere Phase ausgewählt ist aus der Gruppe bestehend aus kristallinem Metall, metallischem Glas, nicht-metallischem Glas und Keramik,
**dadurch gekennzeichnet, dass** die Herstellung durch ein pulverbasiertes, additives Fertigungsverfahrens erfolgt.

2. Verfahren gemäß Anspruch 1, **dadurch gekennzeichnet, dass** für das pulverbasierte, additive Fertigungsverfahren eine Mischung von mindestens zwei Pulvern verwendet wird, wobei mindestens ein Pulver aus einem metallischen Massivglas besteht.

3. Verfahren gemäß einem der Ansprüche 1 oder 2 , wobei die Morphologie der Pulver für das pulverbasierte additive Fertigungsverfahren sphärische Formen, Fasern, Flocken, Plättchen oder Kombinationen davon umfasst.

4. Verfahren gemäß einem der Ansprüche 1 - 3, wobei für das additive Fertigungsverfahren mindestens ein Pulver eines metallischen Massivglas und mindestens ein Pulver eines kristallinen Metalls verwendet werden.

5. Verfahren gemäß einem der Ansprüche 1 - 4, wobei das pulverbasierte additive Fertigungsverfahren ausgewählt ist aus der Gruppe bestehend aus selektivem Laserschmelzen (SLM) und Elektronenstrahlschmelzen (EBM).

6. Verfahren gemäß einem der Ansprüche 1 - 5, wobei die für das additive Fertigungsverfahren verwendeten Pulver ein voneinander verschiedenes Schmelzverhalten bei der Einwirkung von energiereiche Strahlung aufweisen.

7. Verfahren gemäß einem der Ansprüche 1 - 6, wobei die Materialien der mindestens zwei Pulver unterschiedliche Absorptionskoeffizienten für energiereiche Strahlung und/oder unterschiedliche thermische Leitfähigkeiten aufweisen.

8. Verfahren gemäß einem der Ansprüche 1 - 7, wobei das metallische Massivglas-Kompositmaterial isotrope mechanische Eigenschaften aufweist.

9. Verfahren gemäß einem der Ansprüche 1 - 8, wobei die erste Phase und die mindestens eine weitere Phase Schmelzpunkte aufweisen, die nicht mehr als 200°C, insbesondere nicht mehr als 150°C voneinander entfernt sind.

10. Metallisches Massivglas-Kompositmaterial aufweisend mindestens zwei Phasen, wobei die erste Phase ein metallisches Massivglas ist und wobei mindestens eine weitere Phase ausgewählt ist aus der Gruppe bestehend aus kristallinem Metall, metallischem Glas, nicht-metallischem Glas und Keramik, **dadurch gekennzeichnet, dass** das metallischen Massivglas-Kompositmaterial isotrope mechanische Eigenschaften aufweist und die Schmelztemperaturen der ersten und der mindestens einen weiteren Phase nicht mehr als 200°C voneinander entfernt sind.

11. Dreidimensionales Bauteil, aus einem metallischen Massivglas-Kompositmaterial gemäß Anspruch 10.

**Abbildung 1:**

**Abbildung 2:**

Europäisches Patentamt
European Patent Office
Office européen des brevets

## EUROPÄISCHER RECHERCHENBERICHT

Nummer der Anmeldung

EP 18 16 2718

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 107 470 627 A (UNIV JILIN) 15. Dezember 2017 (2017-12-15) * Seite 5, Absatz 1; Abbildung 1 * * Seite 8, Absätze 1,3,5 * * Seite 10, Absatz 1 * ----- | 1-3,6-8 | INV. B22F1/00 B22F3/105 B33Y10/00 B33Y70/00 C22C45/10 |
| X | US 2015/315678 A1 (POOLE JOSEPH C [US] ET AL) 5. November 2015 (2015-11-05) * Absätze [0008], [0029], [0032], [0034] - [0035], [0045], [0060], [0072] - [0073], [0076], [0078]; Abbildung 1 * ----- | 1-11 | C22C1/00 C22C33/04 C22C33/00 B22F3/00 |
| X | LI X P ET AL: "The role of a low-energy-density re-scan in fabricating crack-free Al85Ni5Y6Co2Fe2bulk metallic glass composites via selective laser mel", MATERIALS AND DESIGN, LONDON, GB, Bd. 63, 24. Juni 2014 (2014-06-24), Seiten 407-411, XP029046631, ISSN: 0261-3069, DOI: 10.1016/J.MATDES.2014.06.022 * Seite 407, Spalte 2, Absatz 2; Abbildungen 2,4 * * Seite 408, Spalte 1, Absatz 2 * ----- | 1,5,8 | |
| X | DE 10 2010 027802 A1 (LEIBNIZ INST FUER FESTKOERPER [DE]) 16. Mai 2012 (2012-05-16) * Absätze [0001], [0012], [0017], [0025] - [0026] * ----- | 1,3,5, 8-11 | RECHERCHIERTE SACHGEBIETE (IPC) B22F B33Y C22C B32B |
| X | US 2014/023821 A1 (KWON SOON-JAE [KR] ET AL) 23. Januar 2014 (2014-01-23) * Absätze [0003], [0097], [0100] * ----- -/-- | 10,11 | |

Der vorliegende Recherchenbericht wurde für alle Patentansprüche erstellt

| Recherchenort | Abschlußdatum der Recherche | Prüfer |
|---|---|---|
| Den Haag | 19. September 2018 | Lemoisson, Fabienne |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung

EP 18 16 2718

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | LI X P ET AL: "Crystallization behaviour and thermal stability of two aluminium-based metallic glass powder materials", MATERIALS SCIENCE AND ENGINEERING: A, ELSEVIER, AMSTERDAM, NL, Bd. 530, 26. September 2011 (2011-09-26), Seiten 432-439, XP028116485, ISSN: 0921-5093, DOI: 10.1016/J.MSEA.2011.09.107 [gefunden am 2011-10-07] * Abbildung 7 * ----- | 10 | |
| X | HAYS C C ET AL: "MICROSTRUCTURE CONTROLLED SHEAR BAND PATTERN FORMATION AND ENHANCED PLASTICITY OF BULK METALLIC GLASSES CONTAINING IN SITU FORMED DUCTILE PHASE DENDRITE DISPERSIONS", PHYSICAL REVIEW LETTERS, AMERICAN PHYSICAL SOCIETY, US, Bd. 84, Nr. 13, 27. März 2000 (2000-03-27), Seiten 2901-2904, XP001181390, ISSN: 0031-9007, DOI: 10.1103/PHYSREVLETT.84.2901 * Seite 2901, Spalte 2; Abbildung 1 * ----- | 10 | |
| X | JP 2010 106331 A (FUKUDA METAL FOIL POWDER; UNIV TOHOKU) 13. Mai 2010 (2010-05-13) * Absätze [0001], [0013], [0015], [0017] * ----- | 10,11 | RECHERCHIERTE SACHGEBIETE (IPC) |
| X | CN 101 787 501 A (UNIV BEIJING SCIENCE & TECH) 28. Juli 2010 (2010-07-28) * Seite 8 * ----- -/-- | 10 | |

Der vorliegende Recherchenbericht wurde für alle Patentansprüche erstellt

| Recherchenort | Abschlußdatum der Recherche | Prüfer |
|---|---|---|
| Den Haag | 19. September 2018 | Lemoisson, Fabienne |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes Dokument

EPO FORM 1503 03.82 (P04C03)

Seite 2 von 3

Europäisches
Patentamt

European
Patent Office

Office européen
des brevets

**EUROPÄISCHER RECHERCHENBERICHT**

Nummer der Anmeldung

EP 18 16 2718

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KR 2007 0109300 A (UNIV YONSEI SEOUL [KR]) 15. November 2007 (2007-11-15) * Abbildung 1; Tabelle 2 * ----- | 10 | |
| A | Aaron Wiest: "Thermoplastic Forming and Related Studies of the Supercooled Liquid Region of Metallic Glasses Thesis by", CALIFORNITA INSTITUTE OF TECHNOLOGY, 1. Januar 2010 (2010-01-01), Seiten 1-198, XP055355973, Gefunden im Internet: URL:http://thesis.library.caltech.edu/5472/15/Wiest_Thesis_12-22-09.pdf [gefunden am 2017-03-17] * Tabellen 2.1, 3.3,4.1 * ----- | 10 | |
| A | EP 0 905 269 A1 (YKK CORP [JP]; INOE AKIHISA [JP]) 31. März 1999 (1999-03-31) * Abbildung 3 * ----- | 10 | |
| A | US 2006/144475 A1 (INOUE AKIHISA [JP] ET AL) 6. Juli 2006 (2006-07-06) * Tabelle 1 * ----- | 10 | RECHERCHIERTE SACHGEBIETE (IPC) |
| A | CN 101 629 252 A (UNIV NANJING SCIENCE & TECH) 20. Januar 2010 (2010-01-20) ----- | 10 | |
| A | US 2002/036034 A1 (XING LI-QIAN [US] ET AL) 28. März 2002 (2002-03-28) ----- | 10 | |

Der vorliegende Recherchenbericht wurde für alle Patentansprüche erstellt

| Recherchenort | Abschlußdatum der Recherche | Prüfer |
|---|---|---|
| Den Haag | 19. September 2018 | Lemoisson, Fabienne |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 16 2718

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-09-2018

| Im Recherchenbericht angeführtes Patentdokument | Datum der Veröffentlichung | Mitglied(er) der Patentfamilie | Datum der Veröffentlichung |
|---|---|---|---|
| CN 107470627 A | 15-12-2017 | KEINE | |
| US 2015315678 A1 | 05-11-2015 | KEINE | |
| DE 102010027802 A1 | 16-05-2012 | KEINE | |
| US 2014023821 A1 | 23-01-2014 | KR 20140018459 A<br>US 2014023821 A1 | 13-02-2014<br>23-01-2014 |
| JP 2010106331 A | 13-05-2010 | JP 5250388 B2<br>JP 2010106331 A | 31-07-2013<br>13-05-2010 |
| CN 101787501 A | 28-07-2010 | KEINE | |
| KR 20070109300 A | 15-11-2007 | KEINE | |
| EP 0905269 A1 | 31-03-1999 | DE 69818599 D1<br>DE 69818599 T2<br>EP 0905269 A1<br>JP H1171660 A<br>US 6231697 B1 | 06-11-2003<br>05-08-2004<br>31-03-1999<br>16-03-1999<br>15-05-2001 |
| US 2006144475 A1 | 06-07-2006 | DE 60313879 T2<br>EP 1548143 A1<br>JP 3963802 B2<br>JP 2004091868 A<br>US 2006144475 A1<br>WO 2004022811 A1 | 06-09-2007<br>29-06-2005<br>22-08-2007<br>25-03-2004<br>06-07-2006<br>18-03-2004 |
| CN 101629252 A | 20-01-2010 | KEINE | |
| US 2002036034 A1 | 28-03-2002 | AU 9300401 A<br>US 2002036034 A1<br>WO 0227050 A1 | 08-04-2002<br>28-03-2002<br>04-04-2002 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 101967613 B
- US 7361239 B2

**In der Beschreibung aufgeführte Nicht-Patentliteratur**

- *Scientific Reports,* vol. 3, 2097
- Bulk Metallic Glasses and Their Composites: A Brief History of Diverging Fields. *Journal of Materials,* vol. 2013
- *Science,* 2010, vol. 329 (5997), 1294-1295
- **DOKTORARBEIT.** Bulk metallic glass composites. ETH, 2007
- *Scientific Reports,* vol. 7, 6651